# EUROPEAN PATENT APPLICATION

(11) **EP 3 115 938 A1**
(43) Date of publication of application: **11.01.2017**
(21) Application number: 15306120.5
(22) Date of filing: 08.07.2015
(51) Int. Cl.: G06K 19/077

(54) **A MULTILAYER PACKAGE COMPRISING A RADIOFREQUENCY TAG AND A METHOD FOR MAKING THE SAME**

(71) Applicant: HMY Group, 89470 Moneteau (FR)
(72) Inventor: Lognon, Laurent, 89000 Saint Georges sur Baulche (FR)
(74) Representative: Santarelli

(57) **Abstract**

There is provided a multilayer package having at least one conductive layer, comprising a radiofrequency tag (20), the radiofrequency tag comprising a radiofrequency identification circuit (22) and a slot antenna (24a), the radiofrequency identification circuit being linked to the slot antenna that is formed in the at least one conductive layer of the multilayer package.

There is also provided a method for making a multilayer package comprising a radiofrequency tag, comprising the following steps:
- obtaining a multilayer package having at least one conductive layer, a slot antenna being formed in the at least one conductive layer of the multilayer package; and
- installing a radiofrequency identification circuit on the multilayer package, so as to link the radiofrequency identification circuit to the slot antenna, thereby providing a radiofrequency tag in the multilayer package.

## Description

### FIELD OF THE INVENTION

The present invention relates generally to radiofrequency tags and more specifically to multilayer packages comprising radiofrequency tags such as RFID (Radio Frequency Identification) tags.

### BACKGROUND OF THE INVENTION

Thanks to the low cost of passive RFID tags, RFID systems are used in many different applications including, in particular, retail applications for managing inventory. In such applications, an RFID reader comprising an antenna interrogates RFID tags located in the vicinity of the antenna of the reader.

RFID tags, for instance comprising an aluminium antenna on a PET substrate, may be used with a wide variety of products, such as garments, or diverse packages. However, it has been observed that conductive properties of certain materials such as conductive materials make it difficult to use common RFID tags as widely used for instance on garments or other products.

This is because when such a tag is put on a conductive material, the signals emitted by an RFID reader to energize the tag are shorted by the conductive material when the incident wave arrives on the tag. The proximity of the tag to the conductive material prevents the tag from recovering the energy necessary for being operated.

Another problem with tags positioned on conductive materials is that such materials have shielding properties that may prevent the tag from being supplied with energy from the reader. For instance, this may happen when the reader is located in a position in which the incident wave first encounters a face of the conductive material when the tag is located on the opposite face of the conductive material. In such a case, the incident wave from the reader is reflected by the conductive material on the first face without reaching the tag. As another example, when considering a plurality of conductive packages stored next to each other, each conductive package may shield the tag located on the next conductive package.

Therefore, due to the intrinsic properties of conductive materials, common RFID tags cannot be used for conductive packages as for any other types of packages or wrapping (e.g. plastic packages, cardboard boxes) or also garments.

Thus, identification of conductive packages using RFID is a real challenge for the retail industries.

### SUMMARY OF THE INVENTION

The present invention has been devised to address one or more of the foregoing concerns.

In this context, according to a first aspect of the invention, there is provided a multilayer package having at least one conductive layer, comprising a radiofrequency tag, the radiofrequency tag comprising a radiofrequency identification circuit and a slot antenna, the radiofrequency identification circuit being linked to the slot antenna that is formed in the at least one conductive layer of the multilayer package.

The radiofrequency tag comprised in the multilayer package according to the present invention takes advantage of conductive properties of at least a portion of the package on which it is mounted. More particularly, thanks to the conductivity of the conductive layer of the package, it is possible to have a slot antenna formed within the package itself.

Therefore, radiofrequency identification circuits providing small reading distances may be used, since the reading distances are greatly increased thanks to the slot antenna formed in a conductive layer of the package itself, to which the radiofrequency identification circuit is connected.

According to a second aspect of the invention, there is provided a method for making a multilayer package comprising a radiofrequency tag, comprising the following steps:
- obtaining a multilayer package having at least one conductive layer, a slot antenna being formed in the at least one conductive layer of the multilayer package; and
- installing a radiofrequency identification circuit on the multilayer package, so as to link the radiofrequency identification circuit to the slot antenna, thereby providing a radiofrequency tag in the multilayer package.

Therefore, the method according to the invention allows improving the whole supply chain as well as the cost of the RFID package manufacturing.

The advantages of the multilayer package according to the first aspect are also provided by the method according to the second aspect of the present invention.

Optional features of the invention are further defined in the dependent appended claims.

In some embodiments, the slot antenna is formed within a closing area of the multilayer package.

The closing area usually has better mechanical strength properties than the body of the package. This may be one of the reasons why the slot antenna is preferably formed in this area. The robustness of the package as regard to its content is not modified since only the closing area is used for the tag antenna while the body of the package remains unchanged.

Also, disturbances due to the content of the package are avoided since the content is usually not in contact with the closing area. The slot antenna is thus independent from the content and there is no risk of contaminating the content with the radiofrequency tag, in particular with fixation means of the radiofrequency tag on the package.

Therefore, the package design and the tag antenna design may be carried out separately and the processes and tools applied to the different multilayer sheets before bagging may remain unchanged. Typically, the printing of a graphical image (generally on the package body) and cutting of multilayer sheets at a proper size, and their wrapping onto a roll for storage are unchanged.

In some embodiments, the closing area of the multilayer package comprises two conductive layers, and the slot antenna is formed in both conductive layers so as to be symmetrical regarding a longitudinal plane of symmetry of the multilayer package.

Therefore, when interrogated by a radiofrequency tag reader, the tag antenna may provide a pseudo-omnidirectional response signal, and the likelihood of reaching the reader is increased.

In some embodiments, the closing area is a hot-melt gluing area of the multilayer package. Thus, the method may comprise a step of hot-melt gluing the closing area of the multilayer package.

The robustness of the radiofrequency tag is therefore significantly reinforced.

In some embodiments, the slot antenna is centred between two lateral edges of the closing area.

Therefore, the radiofrequency tag has a symmetrical and homogeneous behavior (i.e. radiation distribution pattern).

In some embodiments, the radiofrequency identification circuit and the slot antenna are linked by an electrical connection. Thus, the step of installing the radiofrequency identification circuit on the multilayer package may comprise electrically connecting the radiofrequency identification circuit and the slot antenna.

In variants, the radiofrequency identification circuit and the slot antenna are linked by an electromagnetic coupling. Thus, the step of installing the radiofrequency identification circuit on the multilayer package may comprise positioning the radiofrequency identification circuit relatively to the slot antenna so as to link them by an electromagnetic coupling.

In some embodiments, the slot antenna has a shape that is open towards the outside of the multilayer package.

In some embodiments, the multilayer package also comprises at least one element for reinforcing the multilayer package in the vicinity of the slot antenna. Thus, the method may comprise a step of reinforcing the multilayer package in the vicinity of the slot antenna using at least one reinforcing element. For example, an adhesive strip may be used.

The size of the reinforcing element can be properly adjusted for having the best RFID results according to the shape of the slot antenna.

When the slot antenna is located in the closing area, the integration of the slot antenna is easier.

In some embodiments, the method may also comprise a step of removing at least one portion of the at least one conductive layer of the multilayer package in order to form the slot antenna.

According to a third aspect of the invention, there is provided a multilayer package having at least one conductive layer comprising an opening, adapted to receive a prefabricated radiofrequency tag, said prefabricated radiofrequency tag comprising a conductive substrate on which a radiofrequency identification circuit and a slot antenna are provided, the radiofrequency identification circuit being linked to the slot antenna of the prefabricated radiofrequency tag, and the prefabricated tag being linked to the at least one conductive layer of the multilayer package thereby increasing the radiation exposure of the prefabricated tag.

Advantageously, the bagging process is totally independent from the tagging process. Also, the tag performances are enhanced since the multilayer sheets of the package become an extension of prefabricated tag.

The prefabricated tag is well adapted to an industrial context since its positioning relatively to the window designed in the multilayer sheets does not require specific tooling. This is because the window may have a rough shape and a large size compared to the slot antenna of the prefabricated tag, and this allows positioning the tag without requiring a high accuracy.

In some embodiments, the opening is surrounding the slot antenna and at least part of the substrate is sandwiched between layers of the multilayer package.

In some embodiments, the opening is formed within a closing area of the multilayer package.

In some embodiments, the prefabricated radiofrequency tag is fixed in the closing area by hot-melt gluing.

In some embodiments, the opening is centred between two lateral edges of the closing area.

In some embodiments, the opening has a shape that is open towards the outside of the multilayer package.

According to a fourth aspect of the invention, there is provided a method for making a multilayer package comprising a prefabricated radiofrequency tag, said method comprising the following steps:
obtaining a multilayer package having at least one conductive layer,
making an opening in the at least one conductive layer of the multilayer package, said opening being adapted to receive a prefabricated radiofrequency tag comprising a conductive substrate on which a radiofrequency identification circuit and a slot antenna are provided, the radiofrequency identification circuit being linked to the slot antenna of the prefabricated radiofrequency tag; and
installing the prefabricated radiofrequency tag in the multilayer package for linking it to the at least one conductive layer of the multilayer package thereby increasing the radiation exposure of the prefabricated tag.

In some embodiments, the opening is surrounding the slot antenna, and at least part of the substrate is sandwiched between layers of the multilayer package.

In some embodiments, the method also comprises a step of fixing the prefabricated tag in the multilayer package by hot-melt gluing.

### BRIEF DESCRIPTION OF THE DRAWINGS

Embodiments of the invention will now be described, by way of example only, and with reference to the following drawings in which:
**Figure 1****,** comprising **Figures 1a** and **1b** showing a side view of a portion of a piece of furniture comprising a radiofrequency tag reader and products having multilayer packages, and a perspective view of a multilayer package in which embodiments of the present invention may be implemented, respectively, and comprising also **Figures 1c** and **1d** showing a general cross-sectional view of an exemplary multilayer material of a multilayer package according to embodiments, and a cross-sectional view of the multilayer package in its closing area, respectively;
**Figure 2****,** comprising **Figures 2a, 2b** and **2c** showing detailed views of a radiofrequency tag embedded in a multilayer package as shown in **Figure 1****,** from different sides of the multilayer package and a cross-sectional view of the radiofrequency tag embedded in the multilayer package, according to first embodiments of the present invention and comprising **Figures 2d** and **2e** showing detailed views of a radiofrequency tag embedded in a multilayer package from different sides of the multilayer package, according to second embodiments of the present invention;
**Figure 3****,** comprising **Figures 3a, 3b** and **3c****,** showing respectively detailed views of a radiofrequency tag embedded in a multilayer package as shown in **Figure 1****,** from different sides of the multilayer package and a cross-sectional view of the radiofrequency tag embedded in the multilayer package, according to third embodiments of the present invention;
**Figure 4** shows two exemplary radiofrequency identification circuits that may be used in embodiments of the present invention;
**Figure 5** represents steps of a method for making a multilayer package comprising a radiofrequency tag according to embodiments of the present invention;
**Figure 6****,** comprising **Figures 6a** and **6b** showing detailed views of two different exemplary prefabricated radiofrequency tags embedded in a multilayer package, according to fourth embodiments of the present invention;
**Figure 7** represents steps of a method for making a multilayer package comprising a prefabricated radiofrequency tag according to embodiments of the present invention.

### DETAILED DESCRIPTION OF EMBODIMENTS OF THE INVENTION

According to particular embodiments of the invention, a radiofrequency tag antenna is designed in the conductive layer(s) of a multilayer package comprising at least one conductive layer.

A corresponding radiofrequency tag comprises a radiofrequency identification circuit (hereafter called radiofrequency element) connected to an antenna, for example a slot antenna designed in the conductive layers of the multilayer package.

In other words, the conductive layers of the multilayer package are used as a wide antenna of a radio frequency tag.

The slot antenna is preferably formed within a closing area of the multilayer package.

For example, the slot antenna is formed within the thickness of the multilayer package, typically by symmetrically removing, in the closing area, at least one portion of the conductive material on each of the facing multilayer sheets forming the package.

In embodiments, for ease of manufacturing, an aperture or opening is formed in the multilayer package, i.e. by removing a portion from all the layers of the multilayer package.

Advantageously, no additional material is needed to form the antenna to be connected to the radiofrequency element. Also, the radiofrequency element may provide a small reading distance since the slot antenna formed in the conductive layer of the multilayer package allows the reading distance to be greatly increased.

In variants, the slot antenna could be provided during the package manufacturing. For instance, conductive sheets with a hole may be used for making the package.

According to a particular embodiment, the radiofrequency element is an element of the RFID type, for example a RFID element conforming the EPCglobal UHF Gen 2 standard. In variants, radiofrequency elements operating in Gigahertz ranges could be used, for instance 2,45 GHz or 5,8 GHz.

According to another aspect, a prefabricated tag is inserted in the closing area of the package, in which a window is designed to let the prefabricated tag radiate, and improve its performance. The prefabricated tag is inserted before hot-melt gluing operations, and hot-melt gluing operations allow fixing the prefabricated tag into the closing area of the package. The tag performances are thus enhanced since the multilayer sheets of the package become an extension of prefabricated tag.

In all the embodiments, a high value capacitor for UHF frequencies is created within the multilayer package (between the conductive layers of the multilayer sheets and/or the conductive substrate of the prefabricated tag), thereby allowing the radiation exposure to be improved compared to common RFID tags.

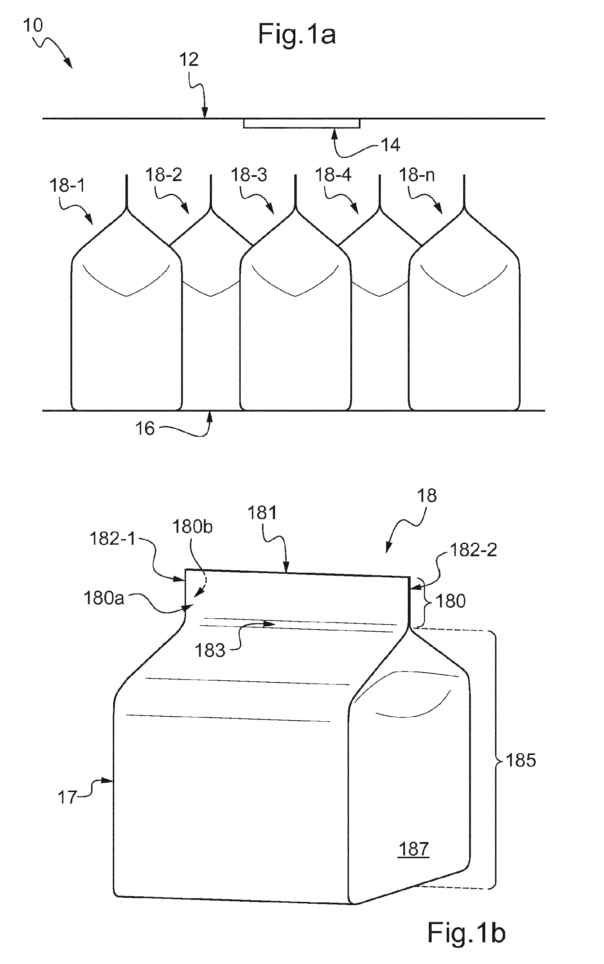

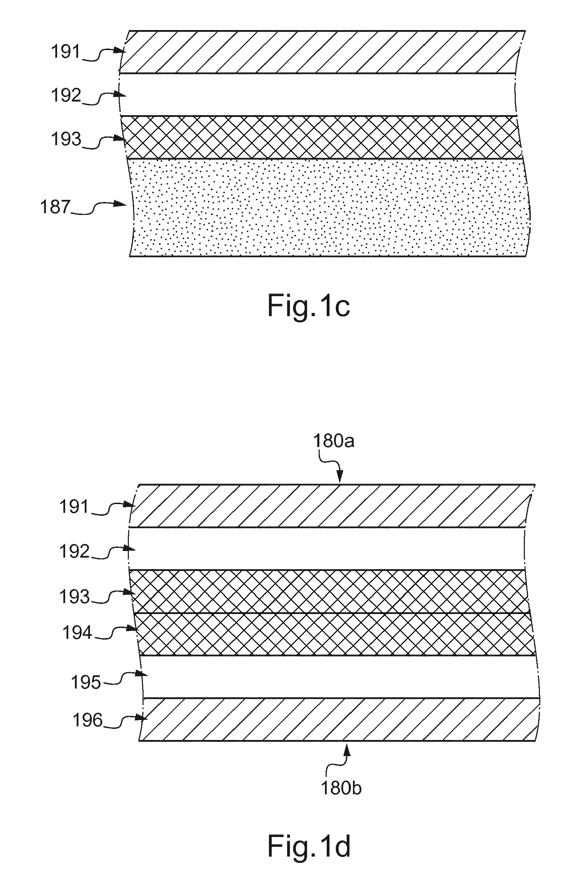

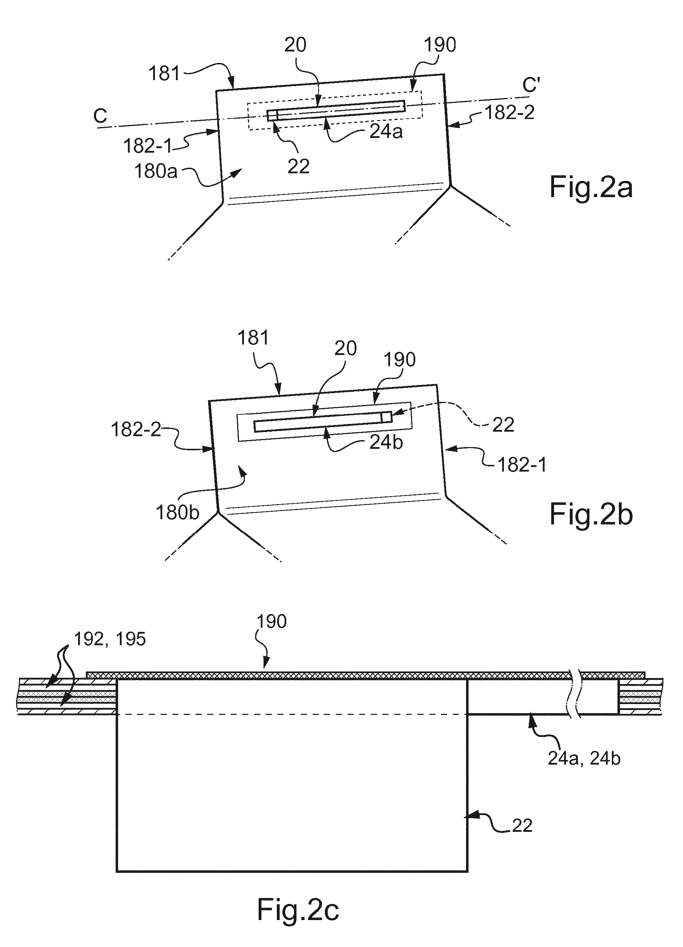

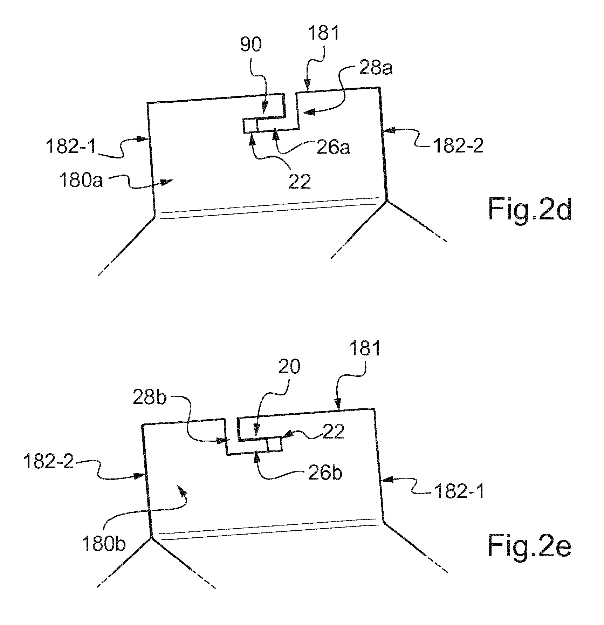

It should be noted the **Figure 1** illustrates a general context in which radiofrequency tags (not shown) according to the present invention may be provided, while **Figures 2** and **3****,** and **6** show different examples of such radiofrequency tags according to different embodiments of the present invention.

**Figure 1** comprises **Figures 1a** and **1b** showing a side view of a portion of a piece of furniture comprising a radiofrequency tag reader and products having multilayer packages that may be provided with radiofrequency tags (not shown) according to embodiments of the present invention, and a perspective view of a multilayer package in which embodiments of the present invention may be implemented, respectively. **Figure 1** also comprises **Figures 1c** and **1d** showing a general cross-sectional view of an exemplary multilayer material of a multilayer package according to embodiments, and a cross-sectional view of the multilayer package in its closing area, respectively.

As illustrated in **Figure 1a****,** the piece of furniture **10** comprises shelves **12** and **16.** The shelf **12** comprises a radiofrequency tag reader antenna **14** directed towards the shelf **16.** The radiofrequency tag reader antenna **14** is connected to a radiofrequency tag reader (not shown).

According to the given example, the shelf **16** is a standard shelf. However, it may be replaced by other means for supporting products such as a guide on which products may be hung.

In the illustrated example, products **18-1** to **18-n,** generically referenced **18,** are stored on the shelf **16.** Each product **18** is equipped with a radiofrequency tag (not shown) adapted to operate with the radiofrequency tag reader antenna **14.**

For the sake of illustration, the products **18** are disposed in rows so that each row is adjacent to one or two rows in order to fill the shelf. In the example of **Figure 1a****,** only two rows are represented. However, there may be more rows, depending on the dimensions of the shelf **16** and of the products **18.** Such a way of storing products allows a large number of products to be stored on the same shelf and thus, space occupancy is optimized.

However, arranging the products **18** in such a way generally prevents from reading the radiofrequency tags positioned on the products, in particular in the case where they comprise conductive materials. Embodiments of the invention are particularly directed to such arrangements according to which the products **18** are close to each other and comprise conductive materials.

As illustrated in **Figure 1b****,** each product **18** comprises a multilayer package referenced **17,** which is filled with content **187** such as solid or liquid content. It may be food content or cosmetic content for instance.

Still for the sake of illustration, the package **17** is for instance a semirigid bag made of a multilayer material comprising an internal or external conductive layer such as a metallic layer. The latter may be made of aluminium.

**Figure 1c** shows a cross-sectional view of an exemplary piece of sheet of such a multilayer material. In the given example, the sheet comprises a first layer of plastic or cardboard **191** as a support for printed information, like commercial information about the product, a conductive layer **192** for reinforcing the bag and protecting an internal plastic coating **193,** for instance a polyethylene layer, that is in contact with the content **187.** The conductive layer **192** may have a thickness of 10-15µmm. It should be noted that this is enough to have an electromagnetic shielding effect, and the metallic layer cannot be traversed by UHF (ultra-high frequency) waves, which are around 865MHz according to RFID European standards. The materials used for the different layers, in particular for the internal layer in contact with the content, depend on the content.

Back to **Figure 1b****,** the package **17** of the product **18** comprises a body **185** and a closing area **180,** generally extending from the body **185** along a plane of symmetry of the package. The closing area **180** comprises a first external face **180a** and a second external face **180b** located at the opposite side of the first external face **180a** regarding a longitudinal plane of symmetry of the package, and it is delimited by four edges: an upper edge **181,** two lateral edges **182-1** and **182-2,** and a lower edge **183.** The closing area is an area of the package where the package is closed, i.e. where two multilayer sheets are joined for closing the package and securing the content **187** into it.

Therefore, the closing area **180** of the package **17** may comprise two times each layer of the multilayer sheet for instance shown in **Figure 1c. Figure 1d** shows a cross-sectional view of a piece of such a closing area **180,** that thus comprises six layers: the external layer of plastic or cardboard **191,** the conductive layer **192,** the internal plastic coating **193,** of the first sheet at the first side **180a** of the closing area, and the internal plastic coating **194,** the conductive layer **195,** and the external layer of plastic or cardboard **196,** of the second sheet at the second side **180b** of the closing area.

For instance, the two multilayer sheets are joined by hot-melt gluing. Also, the closing area **180** may comprise a zip (not shown) so that a user may again close the package **17** after opening, or "easy opening" means(not shown) like a perforated line.

The present invention is not limited to the exemplary multilayer materials shown in **Figures 1c** and **1d** that are only explanatory. The skilled person may apply the present teachings to packages made of any other multilayer materials comprising one of more conductive layers, internal or external, by applying the same operations as described after for the external conductive layers to the internal conductive layers.

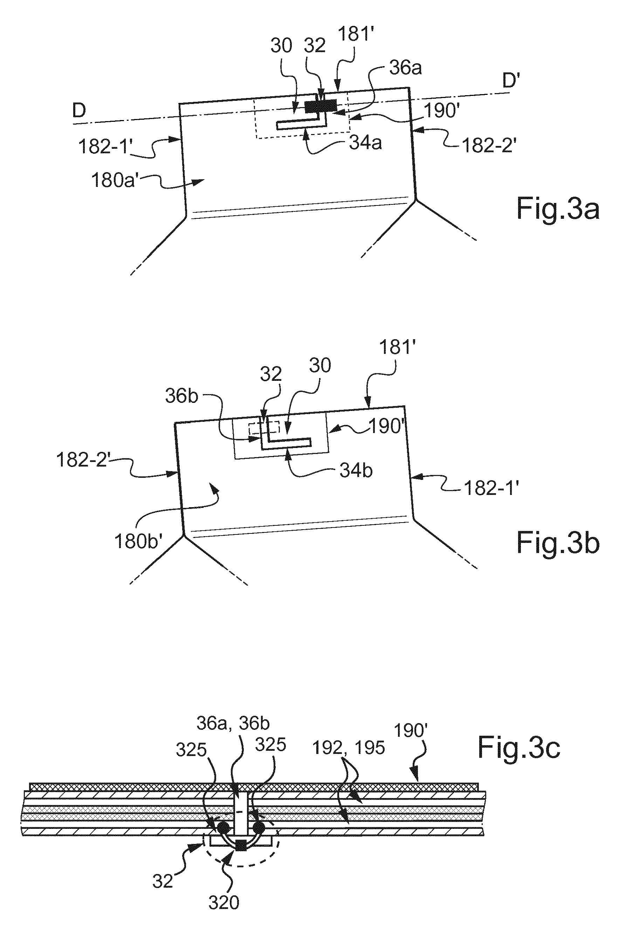

According to embodiments of the invention (see Figures **2** and **3**), a tag antenna (not shown in **Figure 1b**) is designed in the multilayer package **17** preferably in the vicinity of the closing area **180.** This tag antenna is designed to cooperate with the radiofrequency tag reader antenna **14** located above the products **18.**

Still according to particular embodiments, the tag antenna designed in the multilayer package **17** is a slot antenna. It is to be recalled that a slot antenna typically consists of a conductive surface, usually a flat plate, with a hole or slot cut out. When the plate is driven as an antenna by a driving frequency, the slot radiates electromagnetic waves in a similar way to a dipole antenna. The shape and size of the slot, as well as the driving frequency, determine the radiation distribution pattern.

As described below with reference to **Figures 2** and **3****,** the designed tag antenna is connected, for example via an electrical connection or via an electromagnetic coupling, to a radiofrequency element. According to a particular embodiment, the tag antenna, preferably of the slot type, is designed within the thickness of the closing area **180** of the package **17** at least in the conductive layers **192, 195.** In particular embodiments, the slot antenna is designed as an opening in the multilayer package, i.e. in all the layers **191** to **196.** The slot is preferably symmetrical regarding a longitudinal plane of symmetry of the multilayer package. Also, it is preferably centred between the lateral edges **182-1** and **182-2** of the closing area **180,** thereby the radiofrequency tag has a symmetrical and homogeneous behavior (i.e. radiation distribution pattern).

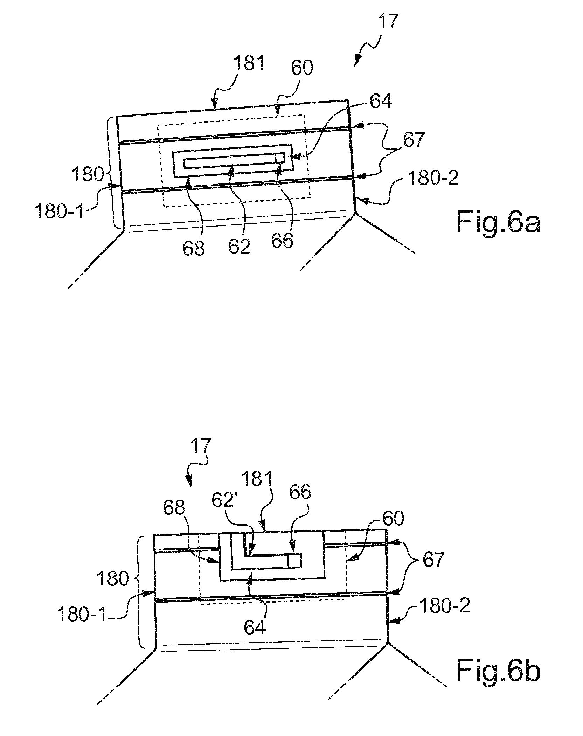

According to embodiments (see **Figure 6**), a window (not shown in **Figure 1b**) is designed in the multilayer package **17** preferably in the vicinity of the closing area **180.** This window is designed to receive a prefabricated tag designed to cooperate with the radiofrequency tag reader antenna **14** located above the products **18.** In particular, the window is configured to surround a slot antenna designed in a conductive substrate of the prefabricated tag, in order to avoid a shielding phenomenon. The outer edges of the substrate are sandwiched between the two multilayer sheets around the window, and are maintained there by hot-melt gluing.

**Figure 2****,** comprising **Figures 2a, 2b** and **2c****,** shows perspective views of a radiofrequency tag 20 embedded into a multilayer package, for instance the package **17** of a product **18** of **Figure 1****,** and a cross-sectional view of the radiofrequency tag **20** in the multilayer package, according to first embodiments of the present invention. **Figure 2** also comprises **Figures 2d and 2e** showing second embodiments of the present invention, with a slot antenna having a different shape than in the first embodiments.

In the following description, numerals referencing elements of **Figure** 1 may thus be used for better understanding only. However, the radiofrequency tag described here is not limited to the arrangement shown in **Figure 1****.**

The radiofrequency tag **20** comprises a radiofrequency element **22** and a slot antenna formed within the conductive layers of the package **17** in its closing area **180,** for instance the conductive layers **192** and **195** of **Figure 1d****.**

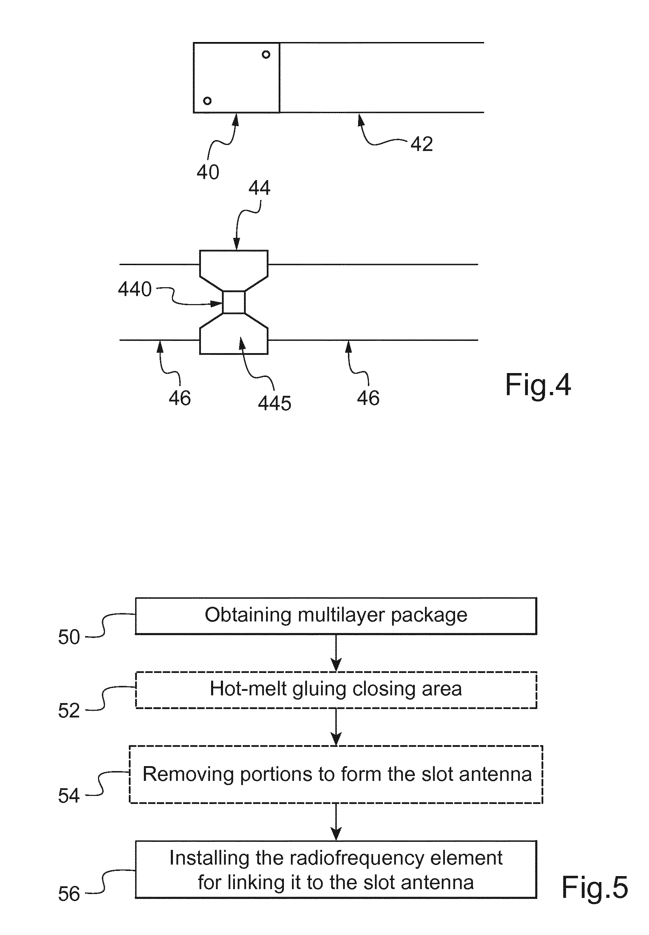

In the given example, the radiofrequency element **22** is a chip tag electromagnetically coupled with the slot antenna. Advantageously, the slot antenna allows increasing the reading distance provided by the radiofrequency tag **20,** as described by reference to **Figure 4****.** It can be, for example, the chip manufactured by TAGSYS RFID (trade mark) under the reference MuTRAK 650 or manufactured by HITACHI (trade mark) under the reference UHF RFID Ultra Small Package Tag IM5-PK2525. For the sake of efficiency, the chip is preferably positioned at one end of the slot antenna, as shown on **Figure 2a****.** The coupling is thus improved.

In these first embodiments, the slot of the slot antenna has a length equal to half the wavelength of the frequency radiated by the RFID reader.

The slot antenna may be designed, for example, by removing a rectilinear portion of conductive material within the conductive layers **192** and **195** of the multilayer sheets located respectively at the first side **180a** and at the second side **180b** of the closing area **180,** thereby forming holes **24a** and **24b** in the conductive layers **192** and **195.**

It should be noted that, in general, such a hole has to be provided in each of the conductive layers of the multilayer package and that the slot antenna designed in the conductive layers is independent from the outer non-conductive layers, i.e. non-conductive layers located between the conductive layers and the outside (for instance layers **191** and **196** on **Figure 1d****).**

In the given example, all the layers **191-196** of the multilayer package comprise a hole so that an opening (an aperture) is formed in the multilayer package, as shown in **Figure 2c****.** The fabrication of such opening is easier than the provision of holes in some of the layers only (including the conductive layers).

However, the present invention is not limited to the given example and it may cover other embodiments provided that the conductive layers are provided with a hole. As another example, the holes may be designed in all the outer layers until the conductive layer (on **Figure 1d****:** layers **191** and **192, 196** and **195**)**.**

Thus, in the general case, the holes **24a** and **24b** designed in the two conductive layers **192** and **195** (as shown in **Figure 1d**) are preferably of the same size and positioned symmetrically relatively to the longitudinal plane of symmetry of the multilayer package. Therefore, the radiation distribution pattern of the tag is symmetrical. Because of the high value capacitor for UHF created by the two conductive layers **(192** and **195)** and the internal non-conductive layers **(193** and **194),** the two conductive layers are equipotential in the closing area. In a particular variant (not shown), the hole **24b** designed in the second conductive layer **195** is larger and/or longer than the hole **24a** designed in the first conductive layer **192** for ease of manufacturing.

In the general case, the holes **24a** and **24b** are for instance substantially parallel to the upper edge **181** of the closing area **180.** They are each preferably centred relatively to the lateral edges **182-1** and **182-2** of the closing area **180.** This configuration enables a homogeneous response when the radiofrequency is energized by a radiofrequency tag reader.

In the present example, the opening formed in the package may weaken the upper edge 181 of the multilayer package 17. In fact, the greater number of layers provided with a hole, the greater the fragility of the multilayer package in the closing area. For these reasons, at least one element like an adhesive strip **190** is preferably used for reinforcing the multilayer package in the vicinity of the slot antenna. In the given example, the adhesive strip **190** is provided on the second face **180b** while the RFID element **22** is located at the other face **180a.** In a variant, another strip may be used on face **180a.**

In variants, a corrugated hot-melt area can significantly reinforce the robustness of the tag.

If the closing area **180** comprises a zip so that a user may close the package **17** again after opening, the radiofrequency tag **20** is preferably located between the zip and the upper edge **181** of the closing area **180.**

If the closing area **180** comprises an "easy opening" means (e.g. a perforated line), the radiofrequency tag **20** is preferably located between this means and the upper edge **181** of the closing area **180** so that when the package **17** is open, the radiofrequency tag can still operate, even if it is separated from the remaining part of the package.

**Figure 2c** shows a cross-sectional magnified view of the radiofrequency tag **20** embedded in the multilayer package along the axis **CC'** shown in **Figure 2a****.**

In the given example, **t**he slot antenna is formed by the holes **24a** and **24b** designed in the conductive layers **192, 195** of the multilayer package as well as in the other layers **191, 193, 194** and **196** of the multi-layer material sheets, thus forming one opening. The chip **22** is positioned at one end of the slot antenna, within the layers of the multilayer package.

In this example, the optional reinforcing element **190** (e.g. adhesive strip) is provided on side **180a** of the package, in order to reinforce the package at the vicinity of the slot antenna **24a, 24b.** It should be noted that the represented view of **Figure 2c** is greatly enlarged and that in practice, the layers in which the antenna slot **24a, 24b** is designed are sufficiently thin to make the reinforcing element **190** maintain the chip **22** on the package.

The above examples, based on a half-wavelength slot antenna are particularly adapted to packages having a minimum width (measured between the lateral edges **182-1** and **182-2**) of around 17 cm. In many case, packages have a smaller width. For food products, a width of 10 cm or a bit less is quite common. For this reason a quarter-wavelength slot antenna (having a width of around 8,5 cm) may advantageously be adapted to shorter packages than half-wavelength slot antennas. However, the quarter-wavelength slot antennas must be open, that is, they must have a shape open towards the outside of the package **17,** while the half-wavelength slot antennas must not.

The example of **Figures 2d** and **2e** differs from the example of **Figures 2a** to **2c** by the shape of the slot antenna only. Indeed, in these second embodiments, the slot of the slot antenna has a length equal to a quarter-wavelength of the frequency radiated by the RFID reader. Thus, the other teachings of **Figures 2a** to **2c** apply to the present example.

The slot antenna may be designed in the conductive layers of the package, for example, as holes extending from one of the lateral edges **182-1** and **182-2** of the closing area **180.** Thus, the shape of the slot antenna is open towards the outside of the package as required for the quarter-wavelength antennas. However, in this case, the slot antenna of the radiofrequency tag may be in contact with other radiofrequency tags located on adjacent products, typically when they are stored in rows as shown in **Figure 1a****.** Therefore, there is a need for an improved arrangement for the radiofrequency tag with a quarter-wavelength slot antenna.

In the present example, it is proposed to open the shape of the slot antenna towards the upper edge **181** of the closing area of the package. For instance, this may be done by removing two rectilinear portions of conductive material from the conductive layers of the multilayer sheets located respectively at the first side **180a** and at the second side **180b** in the closing area **180,** thereby forming adjacent holes **26a, 28a,** and **26b, 28b** on each conductive sheet. It should be noted that, in general, a hole has to be provided in each of the conductive layers of the multilayer package and that the slot antenna designed in the conductive layers of the package is independent from the outer non-conductive layers, i.e. non-conductive layers located between the conductive layers and the outside (for instance layers **191** and **196** on **Figure 1d****).**

In the given example, all the layers **191-196** of the multilayer package comprise holes so that an opening (an aperture) with a bent shape open towards the outside is formed in the multilayer package. The fabrication of such opening is easier than the provision of holes in some of the layers only (including the conductive layers).

However, the present invention is not limited to the given example and it may cover other embodiments provided that the conductive layers are provided with holes. As another example, the holes may be designed in all the outer layers until the conductive layer (on **Figure 1d****:** layers **191** and **192, 196** and **195**)**.**

Thus, in the general case, the first holes **26a** and **26b** designed in the conductive layers **192, 195** are each substantially parallel to the upper edge **181** of the closing area **180** while the second holes **28a** and **28b** each extends from their respective first holes **26a** and **26b** and each opens at the upper edge **181** so as to have a shape open towards the outside of the package **17.**

Advantageously, thanks to the position of the second holes **28a** and **28b,** contact between two slot antennas of similar products is avoided, and the slot antenna may be centred relatively to the lateral edges **182-1** and **182-2** of the closing area **180** as well as keeping the open shape of the slot antenna, thereby improving the homogeneity of the radiation pattern of the tag antenna.

In the general case, the holes **26a** and **26b** are preferably of the same size and positioned symmetrically relatively to the longitudinal plane of symmetry of the multilayer package. Such symmetrical location allows a symmetrical behaviour (i.e. radiation distribution pattern) of the tag antenna. Because of the high value capacitor for UHF created by the two conductive layers **(192** and**195)** and the internal non-conductive layers **(193** and **194),** the two conductive layers are equipotential in the closing area.

In a variant (not shown), the holes **26b and 28b** are larger and/or longer than the holes **26a** and **28b** for ease of manufacturing.This allows the positioning of the slots to be less precise, and thus easier to manufacture.

**Figure 3****,** comprising **Figures 3a, 3b** and **3c****,** shows perspective views of a radiofrequency tag **30** embedded into a multilayer package, for instance the package **17** of product **18** of **Figure 1****,** and a cross-sectional view of the radiofrequency tag **20** in the multilayer package, according to third embodiments of the present invention.

In the given example **(****Figure 3a****),** the radiofrequency tag **30** comprises a radiofrequency element **32** and a slot antenna designed within the conductive layers of a package **17'** (similar to the package **17** of **Figure 1b**) in its closing area **180'** (similar to closing area **180** of **Figure 1b**)**,** similar to the layers **192** and **196** shown in Figure **1d****.**

In the given example, the radiofrequency element **32** is an RFID strap electrically connected to the slot antenna, as described by reference to **Figure 4****.** The slot antenna allows increasing the reading distance provided by the radiofrequency tag **30.**

It is recalled that a RFID strap comprises a chip put on a substrate, thereby increasing the size of the contacts for connecting an external antenna as explained below. It can be, for example, the RFID strap manufactured by Avery Dennison Corporation as described in the document WO 2014/210000 A1.

In these third embodiments, the slot of the slot antenna has a length equal to a quarter of the wavelength of the frequency radiated by the RFID reader. Such slot antennas may advantageously be adapted to shorter packages than half-wavelength slot antennas. However, as mentioned above, they must be open, that is, they must have a shape open towards the outside of the package **17',** while the half-wavelength slot antennas must not.

As already mentioned, the slot antenna may be designed in the conductive layers of the package, for example, as holes extending from one of the lateral edges **182-1'** and **182-2'** of the closing area **180'** (similar to the lateral edges **182-1** and **182-2** of **Figure 1b**)**.** However, in this case, the slot antenna of the radiofrequency tag may be in contact with other radiofrequency tags located on adjacent products, typically when they are stored in rows as shown in **Figure 1a****.**

In the present example, it is proposed to open the shape of the slot antenna towards the upper edge of the closing area of the package. For instance, this may be done by removing two rectilinear portions of conductive material from the conductive layers of the multilayer sheets located respectively at the first side **180a'** and at the second side **180b'** in the closing area **180',** thereby forming adjacent holes **34a, 36a,** and **34b, 36b** on each conductive sheet. It should be noted that, in general, a hole has to be provided in each of the conductive layers of the multilayer package and that the slot antenna designed in the conductive layers of the package is independent from the outer non-conductive layers, i.e. non-conductive layers located between the conductive layers and the outside (for instance layers **191** and **196** on **Figure 1d**)**.**

In the given example, all the layers **191-196** of the multilayer package comprise holes so that an opening (an aperture) with a bent shape open towards the outside is formed in the multilayer package, as shown in **Figure 3c****.** The fabrication of such opening is easier than the provision of holes in some of the layers only (including the conductive layers).

However, the present invention is not limited to the given example and it may cover other embodiments provided that the conductive layers are provided with holes. As another example, the holes may be designed in all the outer layers until the conductive layer (on **Figure 1d****:** layers **191** and **192, 196** and **195**)**.**

Thus, in the general case, the first holes **34a** and **34b** designed in the conductive layers **192, 195** are each substantially parallel to the upper edge **181'** of the closing area **180'** (similar to the upper edge **181** of **Figure 1b**) while the second holes **36a** and **36b** each extends from their respective first holes **34a** and **34b** and each opens at the upper edge **181'** so as to have a shape open towards the outside of the package **17'.**

Advantageously, thanks to the position of the second holes **36a** and **36b,** contact between two slot antennas of similar products is avoided, and the slot antenna may be centred relatively to the lateral edges **182-1'** and **182-2'** of the closing area **180'** as well as keeping the open shape of the slot antenna, thereby improving the homogeneity of the radiation pattern of the tag antenna.

In the general case, the holes **34a** and **34b** are preferably of the same size and positioned symmetrically relatively to the longitudinal plane of symmetry of the multilayer package. Such symmetrical location allows a symmetrical behaviour (i.e. radiation distribution pattern) of the tag antenna. Because of the high value capacitor for UHF created by the two conductive layers **(192** and **195)** and the internal non-conductive layers **(193** and **194),** the two conductive layers are equipotential in the closing area.

In a variant (not shown), the holes **34b and 36b** are larger and/or longer than the holes **34a** and **36a** for ease of manufacturing. Indeed, the holes **34a** and **36a** are easier to position.

In the present example, the opening formed in the package may weaken the upper edge **181'** of the multilayer package **17'.** In fact, the greater number of layers provided with a hole, the greater the fragility of the multilayer package in the closing area. In addition, the open shape of the slot may also weaken the upper edge **181'** of the package **17'.** For these reasons, at least one element like an adhesive strip **190'** is preferably used for reinforcing the multilayer package in the vicinity of the slot antenna. In the given example, the adhesive strip **190'** is provided on the second face **180b'** while the RFID element **32** is located at the other face **180a'.** In a variant, another strip may be used on face **180a'.**

In case the closing area **180'** comprises a zip so that a user may still close the package **17'** again after opening, the radiofrequency tag **30** is preferably located between the zip and the upper edge **181'** of the closing area **180'.**

If the closing area **180'** comprises an "easy opening" means, like a perforated line, the radiofrequency tag **30** is preferably located between this means and the upper edge **181'** of the closing area **180'** so that when the package **17'** is open, the radiofrequency tag can still operate, even if it is separated from the remaining part of the package.

**Figure 3c** shows a cross-sectional view of the radiofrequency tag **30** embedded in the multilayer package along the axis **DD'** shown in **Figure 3a****.**

In the given example, the slot antenna is formed by the holes **34a, 34b,** and **36a, 36b** (not shown), that are designed in the conductive layers **192, 195** of the multilayer package as well as in the other layers **191, 193, 194** and **196** of the multi-layer material sheets, thus forming one opening. The RFID strap **32** is positioned onto the opening. As can be seen on the enlarged view of **Figure 3c****,** the RFID strap comprises a substrate embedding an RFID chip **320** connected to the conductive layer **192** by electric contact points **325.** More details on the RFID strap are given below with reference to **Figure 4****.**

In this example, the optional reinforcing element **190'** (here, an adhesive strip) is provided on side **180a** of the package, in order to reinforce the package at the vicinity of the slot antenna. It should be noted that the represented view of **Figure 3c** is greatly enlarged and that in practice, the layers in which the antenna slot is designed are sufficiently thin to make the reinforcing element **190'** maintain the RFID strap **32** on the package.

**Figure 4** shows two examples of radiofrequency elements (radiofrequency identification circuits) that may be used in embodiments of the present invention.

The radiofrequency element may be a chip tag **40** comprising a casing including an RFID chip and a small UHF antenna that are embedded in resin (not shown) like common electronic components.

Such chip tags are commonly used for tagging small products, and may withstand tough environmental conditions. Due to their small size, usually from 2.5 x 2.5 mm to 7 x 7 mm, the chip tags have a short-range reading distance and it is thus often necessary to come into contact with a radiofrequency tag reader to read the tag.

The reading distance may be increased thanks to an external antenna coupled to the chip tag. Preferred embodiments of the invention use this possibility by providing a slot antenna **42** designed within the conductive layers of a package and by electromagnetically coupling the chip tag **40** with the slot antenna **42** thus provided. For the sake of efficiency, the chip is preferably positioned at one end of the slot antenna, as shown on **Figure 2c****.** The electromagnetic coupling is thus improved.

In a preferred variant, the radiofrequency element is an RFID UHF strap **44** comprising an RFID chip **440** put on a substrate **445,** thereby increasing the size of the contacts for connecting the slot antenna and making it easier.

RFID straps may have a size comparable to CMS components and they are provided in reels as CMS components may be.

Specific machineries for placing the chip **440** close to an external antenna for achieving the electronic connection are not necessary, and the strap **44** may be connected to a slot antenna **46** according to embodiments of the present invention using conventional equipment.

Consequently, the present invention may preferably use RFID strap **44** as a radiofrequency element since the installation of the element on the package may be achieved at low cost.

In general, the RFID strap is positioned on the slot antenna, as shown in **Figure 3c****,** away from the open side of the slot antenna.

**Figure 5** represents some steps of a method for making a multilayer package comprising a radiofrequency tag according to embodiments of the present invention, as described with reference to **Figures 1 to 4****.**

This method may be implemented in an industrial context, wherein packages are assembled and filled with content so as to provide products as products **18.** Therefore, the method according to the invention allows improving the whole supply chain.

The method starts with a step **50** of obtaining a multilayer package **17** as shown in **Figure 1****.** The multilayer package **17** comprises at least one internal or external conductive layer (like **192** and **195** in **Figure 1d**)**,** for instance a metallic layer and it may also comprise non-conductive layers (like **191, 193, 194,** and **196** in **Figure 1d**)**,** like a cardboard layer and/or a plastic layer.

In some embodiments, the obtained multilayer package **17** comprises a slot antenna which is already formed in the at least one conductive layer (like **192** and **195** in **Figure 1d****)** of the multilayer package **17.** In the present example, it is assumed that the multilayer package **17** does not comprise a slot antenna formed in the conductive layer yet.

At optional step **52,** it is assumed that the body **185** of the package **17** is filled with content **187,** for instance with food content or cosmetic content, and the package **17** is closed at its closing area **180,** for instance by hot-melt gluing. This step is optional because the multilayer package **17** obtained at step **50** may be already closed.

At step **54,** if the multilayer package **17** does not already comprise a slot antenna as assumed in the present example, such a slot antenna or centred window is formed within the multilayer package **17** by removing a least one portion of conductive material from at least each conductive layer **192** and **195,** in the closing area **180.**

The present invention also covers embodiments in which holes are also formed in non-conductive layers. As shown in **Figure 2c** and **3c****,** an opening (an aperture) may be formed in the multilayer package, i.e. all the layers **191-196** may be cut to form a hole. This is because such opening is easier to provide than holes formed in only some layers (including the conductive layers).

For instance, the holes may be formed in the conductive layers **192** and **195,** and the outer layers may be added afterwards to the multilayer package.

In a variant, holes may be designed in all the layers until the conductive layers, i.e. layers **191,192,195** and **196.**

According to first preferred embodiments, holes are formed within the conductive layer of each multilayer sheet of the package in its closing area by removing one rectilinear portion of conductive material from each conductive layer, preferably so that the slot antenna is symmetrical regarding a longitudinal plane of symmetry of the multilayer package. In the example of **Figures 2a to 2c****,** the obtained holes have a length equal to half the wavelength of the frequency radiated by the RFID reader. They are preferably centred between the two lateral edges of the closing area. More details on the slot antenna according to the first embodiments may be found in the description of **Figures 2a to 2c****.**

According to second preferred embodiments, holes are formed within the conductive layer of each multilayer sheet of the package in its closing area by removing two rectilinear portions of conductive material from each conductive layer thereby forming a shape that is open towards the outside of the multilayer package, and preferably so that the slot antenna is symmetrical regarding a longitudinal plane of symmetry of the multilayer package. In the example of **Figures 2d, 2e****,** **3a, 3b, and 3c****,** the total length of the holes in each sheet of the closing area is equal to a quarter of the wavelength of the frequency radiated by the RFID reader. More details on the slot antenna according to the second embodiments may be found in the description of **Figures 2d, 2e****,** **3a, 3b, and 3c****.**

Optionally, the method may comprise a step (not shown) of reinforcing the multilayer package in the vicinity of the slot antenna using at least one reinforcing element, for instance an adhesive strip. This is because the greater number of layers provided with a hole, the greater the fragility of the multilayer package in the closing area **180.** This is also because of the open shape of the slot that may weaken the package in its closing area.

At step **56,** a radiofrequency element is installed in the closing area of the multilayer package, so as to be electromagnetically coupled with or electrically connected to the slot antenna made in the multilayer package.

As already mentioned with reference to **Figure 4****,** the radiofrequency element is for instance a chip tag or an RFID strap. The latter is well adapted to an industrial context since its positioning relatively to the slot antenna for ensuring the connection between both elements does not require specific tooling due to the enlarged zones of contact of the RFID strap compared to the very small RFID chip comprised therein.

Thanks to the shape of the slot antenna, preferably centred between the two lateral edges of the closing area of the package, and the coupling with the radiofrequency element, the radiofrequency tag thus obtained is characterized by a homogeneous and symmetrical radiation distribution pattern. Indeed, it may provide a pseudo-omnidirectional and homogeneous response signal upon interrogation by a radiofrequency tag reader, and the likelihood of reaching the latter is increased.

**Figure 6** comprises **Figures 6a and 6b** that show two different examples of a prefabricated radiofrequency tag **60** embedded into a multilayer package, according to fourth embodiments of the present invention. In the example of **Figure 6a****,** the prefabricated tag **60** comprises a half-wavelength slot antenna **62,** and in the example of **Figure 6b****,** the prefabricated tag **60** has a quarter-wavelength slot antenna **62'** with a shape open towards the outside. The multilayer package is similar to package **17** described with reference to **Figure 1b****,** and is preferably made of two multilayer sheets as described with reference to **Figures 1c** and **1d****.**

In both examples, the prefabricated tag **60** comprises a highly conductive substrate **64** in which a slot antenna **62/62'** is designed. It may be, for instance a PET substrate with an aluminium conductive layer on it. The aluminium layer preferably covers the whole PET substrate.

The prefabricated tag **60** also comprises an RFID circuit **66,** for example a silicon chip, electromagnetically coupled with the slot antenna **62/62'.** It can be, for example, the chip manufactured by HITACHI (trade mark) under the reference UHF RFID Ultra Small Package Tag IM5-PK2525. Thus, in the given examples, the chip is already accurately positioned on its substrate **64,** preferably at one end of the slot antenna **62/62',** as shown on **Figures 6a and 6b****.**

Still in both examples, an opening (or cut-off) referred to as window **68** is designed in the closing area **180** of the package. It may be designed by making an opening in the multilayer sheets forming the closing area, for example by perforation. For ease of manufacturing, the shape of the window **68** may be rectangular as shown in **Figures 6a and 6b****.** In variant, it may have any other shape provided that the slot antenna of the prefabricated tag that will be inserted at the window will not be shielded by the multilayer sheet of the package, as will be explained below. In other words, the window **68** is a cut-off in the multilayer sheets of the closing area that must surround the slot antenna of the prefabricated tag **60** without hiding it.

In practice, the surface area of the prefabricated tag **60** must be larger than the surface area of the window **68.** This is because the prefabricated tag **60** will be inserted between the two multilayer sheets in the closing area **180,** and the edges of the substrate **64** must be sandwiched between the two multilayer sheets surrounding the window **68** so as to allow fixing the whole prefabricated tag **60** in the closing area with the open widow surrounding the slot antenna **62/62'.** For example, with reference to the multilayer sheets of **Figure 1d****,** the outer edges of the substrate **64** are typically located between layers **191** to **193** on one side and **194** to **196** on the other side.

As shown in **Figures 6a and 6b****,** the two multilayer sheets and/or outer edges of the conductive substrate **64** may be hot-melt glued in at least one area **67** (in the closing area **180**) for example in a way parallel to the upper edge **181** of the package.

Furthermore, in case of the prefabricated tag **60** comprises a half-wavelength slot antenna **62** (Figure **6a**)**,** the window **68** is preferably centred between the four edges of the closing area **180,** thereby improving the homogeneity of the radiation pattern of the tag.

In case the prefabricated tag **60** comprises a quarter-wavelength slot antenna **62'** (Figure **6b**)**,** the slot must be open towards the outside of the package as mentioned above with reference to Figures **2d** and **2e****.** To this end, the window **68** surrounding the slot antenna **62',** has to be open toward the outside of the package too. In such a case, the hot-melt gluing has to be adapted as shown in Figure **6b****.** In the present example, it is proposed to design the window **68** at the upper edge **181** of the closing area of the package in order to avoid the contact with radiofrequency tags located on adjacent products, typically when they are stored in rows as shown in **Figure 1a****.** In variants, the window **68** could be designed so as to extend from one of the lateral edges **182-1** and **182-2** of the closing area.

Preferably, the prefabricated tag substrate **64** is chosen for having an appropriate rigidity. Advantageously, no external adhesive strip for reinforcing the multilayer package in the window area **68** is necessary in addition to the hot-melt gluing areas **67.** However, additional corrugated hot-melt gluing (not shown) parallel to the lateral edges **180-1, 180-2** may reinforce the rigidity of the prefabricated tag **60.**

The substrate **64** may also be chosen so as to have a good conductivity (for instance, a better conductivity than the conductive layer of the multilayer package). The tag performances are thus enhanced since the multilayer sheets of the package become an extension of prefabricated tag **60.**

The interest of using a prefabricated tag **60** is that the operations requiring a particular accuracy, such as slot cutting or the positioning/attachment of the RFID element **66** are made apart from bagging, in a factory where these operations may be optimized.

Advantageously, the conductive substrate **64** and the conductive layers **192** and **195** (see Figure **1d****)** of the package that are separated by non-conductive layers **193** and **194** (see Figure **1d****),** are equipotential. In some embodiments, the layers aforementioned are equipotential due to the hot-melt gluing operations that allow local electrical contacts to be created between the conductive layers **192** and **195** of the package and the conductive substrate **64** that are thus shortened. In some embodiments, the layers aforementioned are equipotential due to the high value capacitor for UHF created thanks to the thin non-conductive layers **(193** and **194)** that are sandwiched between conductive layers **(192, 195** and **64)** as a multilayer material.

The equipotential layers increase the tag exposure to the radiation compared to the prefabricated tag alone.

In embodiments, the prefabricated tag **60** has some features in common with the embedded radiofrequency tag described above with reference to Figures **2a** to **3b****.** The skilled person can easily adapt these features to prefabricated tag embodiments.

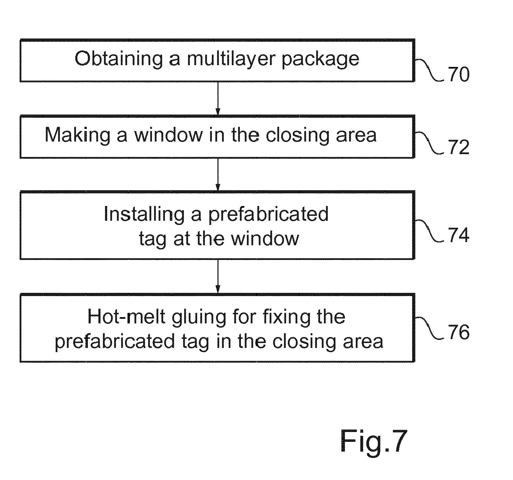

**Figure 7** represents some steps of a method for making a multilayer package comprising a prefabricated radiofrequency tag according to embodiments of the present invention, as described with reference to **Figure 6****.**

This method may be implemented in an industrial context, wherein packages are assembled and filled with content so as to provide products as products **18.** Therefore, the method according to the invention allows improving the whole supply chain.

The method starts with a step **70** of obtaining a multilayer package **17** as shown in **Figure 1****.** The multilayer package **17** comprises at least one internal or external conductive layer (like **192** and **195** in **Figure 1d****),** for instance a metallic layer and it may also comprise non-conductive layers (like **191, 193, 194,** and **196** in **Figure 1d****),** like a cardboard layer and/or a plastic layer. It is assumed that the body **185** of the package **17** is filled with content **187,** for instance with food content or cosmetic content, and the body of the package **17** is closed, by hot-melt gluing for instance at the basis of the closing area **183** (as shown in **Figure 1b****).** Thus, the bagging process is totally independent from the tagging process that will be described now.

At step **72,** a window (or cut-off) is made in closing area of the obtained multilayer package **17,** in both multilayer sheets. This may be made using known perforating tools.

The window is designed for receiving a slot antenna of a prefabricated tag **60** that will be installed in the following step of the bagging process. Depending on the nature of the prefabricated tag **60,** the window will be designed in a centred position between the four edges or the closing area (half-wavelength tag), or centred between the lateral edge but at the upper edge in order to be open towards the outside of the package (quarter-wavelength tag).

For ease of manufacturing, the shape of the window may be rectangular as shown in **Figures 6a and 6b****.** In variant, it may have any other shape provided that the slot antenna that will be inserted in the window area will be surrounded without being hidden or shielded by the multilayer sheets of the package.

At step **74,** a prefabricated tag **60** as described with reference to **Figure 6****,** is installed in the closing area of the multilayer package, in particular between the two multilayer sheets in the window area.

More precisely, as described with reference to **Figure 6****,** the prefabricated tag comprises a chip on a substrate and a slot antenna designed in the substrate, coupled with the chip. The tag is positioned so that the outer edges of the substrate of the prefabricated tag are sandwiched between the multilayer sheets of the closing area and so that the slot antenna is positioned within the window without being hidden or shielded by the multilayer sheets of the package.

The prefabricated tag is well adapted to an industrial context since its positioning relatively to the window designed in the multilayer sheets does not require specific tooling. This is because the window may have a rough shape and a large size compared to the slot antenna of the prefabricated tag, and this allows positioning the tag without requiring a high accuracy.

Next, at step **76,** the prefabricated tag is fixed in the package. This is done by hot-melt gluing the outer edges of the substrate that are sandwiched between the multilayer sheets surrounding the window, for example in a way parallel to the upper edge of the package as shown in **Figures 6a and 6b****.** This step may be performed using known hot-melt gluing tools.

In embodiments (not shown), only one hot-melt gluing operation is performed for fixing the conductive substrate and the two sheets together. Preferably, this operation is performed close to the upper edge **181** of the closing. In variants, several hot-melt gluing operations may be performed in the closing area. For instance, the whole closing area **180** may be hot-melt glued.

The conductive substrate of the prefabricated tag and the conductive layers of the package surrounding the slot antenna are virtually equipotential thus allowing an improved radiation exposure compared to the prefabricated tag only. The prefabricated tag performances are thus enhanced since the multilayer sheets of the package become an extension of prefabricated tag. This is achieved without requiring specific tools.

Also, as explained with reference to **Figure 6****,** the substrate of the prefabricated tag may be chosen rigid so as to avoid the need of a reinforcing element in the window area. The package may be reinforced using a further corrugated hot-melt gluing in the closing area, for instance parallel to the lateral edges.

Although the present invention has been described hereinabove with reference to specific embodiments, the present invention is not limited to the specific embodiments, and modifications which lie within the scope of the present invention will be apparent to a person skilled in the art.

Many further modifications and variations will suggest themselves to those versed in the art upon making reference to the foregoing illustrative embodiments, which are given by way of example only and which are not intended to limit the scope of the invention as determined by the appended claims. In particular different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

### Reference numerals:

10: piece of furniture
12, 16: shelves
14: radiofrequency tag reader
17: multilayer package
18-1 to 18-n, 18: products
180: closing area of the multilayer package
180a: first external face or side of the closing area
180b: second external face or side of the closing area
181: upper edge of the closing area
182-1, 182-2: lateral edges of the closing area
183: lower edge of the closing area
185: body of the multilayer package
187: content of the multilayer package
190, 190': reinforcing element
191, 196: external plastic or cardboard layer
192, 195: conductive layer
193, 194: internal plastic coating
20, 30, 60: radiofrequency tag
22, 32, 66: radiofrequency element
24a, 24b, 26a, 26b, 28a, 28b, 34a, 34b, 36a, 36b: holes of the slot antenna
325: electric contact point
320, 440: RFID chip
40: chip tag
42, 46, 62, 62': slot antenna
44: RFID strap
445: substrate of the RFID strap 50, 70: obtaining step
52, 76: closing step
54, 72: removing step
56, 74: installing step
64: substrate
67: hot-melt gluing area
68: window (cut-off, opening)

## Claims

1. A multilayer package (17) having at least one conductive layer (192 ; 195), comprising a radiofrequency tag (20 ; 30), the radiofrequency tag comprising a radiofrequency identification circuit (22 ; 32) and a slot antenna, the radiofrequency identification circuit being linked to the slot antenna that is formed in the at least one conductive layer (192 ; 195) of the multilayer package (17).

2. The multilayer package (17) of claim 1, wherein the slot antenna is formed within a closing area (180) of the multilayer package (17).

3. The multilayer package (17) of claim 2, wherein the closing area (180) of the multilayer package comprises two conductive layers (192 ; 195), and wherein the slot antenna is formed in both conductive layers so as to be symmetrical regarding a longitudinal plane of symmetry of the multilayer package.

4. The multilayer package (17) of any one of claims 2 or 3, wherein the closing area (180) is a hot-melt gluing area of the multilayer package (17).

5. The multilayer package (17) of any one of claims 2 to 4, wherein the slot antenna is centred between two lateral edges (182-1, 182-2) of the closing area (180).

6. The multilayer package (17) of any one of claims 1 to 5, wherein the radiofrequency identification circuit (32) and the slot antenna are linked by an electrical connection.

7. The multilayer package (17) of any one of claims 1 to 6, wherein the radiofrequency identification circuit (22) and the slot antenna are linked by an electromagnetic coupling.

8. The multilayer package (17) of any one of claims 1 to 7, wherein the slot antenna has a shape that is open towards the outside of the multilayer package (17).

9. The multilayer package (17) of any one of claims 1 to 8, comprising at least one element (190; 190') for reinforcing the multilayer package (17) in the vicinity of the slot antenna.

10. A method for making a multilayer package comprising a radiofrequency tag, said method comprising the following steps:
obtaining (50) a multilayer package having at least one conductive layer, a slot antenna being formed in the at least one conductive layer of the multilayer package; and
installing (56) a radiofrequency identification circuit on the multilayer package, so as to link the radiofrequency identification circuit to the slot antenna, thereby providing a radiofrequency tag in the multilayer package.

11. The method of claim 10, wherein the slot antenna is formed within a closing area of the multilayer package.

12. The method of claim 11, wherein the closing area of the multilayer package comprises two conductive layers, and wherein the slot antenna is formed in both conductive layers so as to be symmetrical regarding a longitudinal plane of symmetry of the multilayer package.

13. The method of any one of claims 11 or 12, comprising a step of hot-melt gluing (52) the closing area of the multilayer package.

14. The method of any one of claims 11 to 13, wherein the slot antenna formed in the at least one conductive layer is centred between two lateral edges of the closing area.

15. The method of any one of claims 10 to 14, also comprising a step of removing (54) at least one portion of the at least one conductive layer of the multilayer package in order to form the slot antenna.

16. The method of any one of claims 10 to 15, wherein the step of installing (56) the radiofrequency identification circuit on the multilayer package comprises electrically connecting the radiofrequency identification circuit and the slot antenna.

17. The method of any one of claims 10 to 16, wherein the step of installing (56) the radiofrequency identification circuit on the multilayer package comprises positioning the radiofrequency identification circuit relatively to the slot antenna so as to link them by an electromagnetic coupling.

18. The method of any one of claims 10 to 17, wherein the slot antenna has a shape that is open towards the outside of the multilayer package.

19. The method of any one of claims 10 to 18, comprising reinforcing the multilayer package in the vicinity of the slot antenna using at least one reinforcing element.

20. A multilayer package (17) having at least one conductive layer (192 ; 195) comprising an opening (68), adapted to receive a prefabricated radiofrequency tag (60), said prefabricated radiofrequency tag comprising a conductive substrate (64) on which a radiofrequency identification circuit (66) and a slot antenna (62 ; 62') are provided, the radiofrequency identification circuit (66) being linked to the slot antenna (62 ; 62') of the prefabricated radiofrequency tag (60), and the prefabricated tag being linked to the at least one conductive layer (192 ; 195) of the multilayer package (17) thereby increasing the radiation exposure of the prefabricated tag.

21. The multilayer package of claim 20, wherein the opening is surrounding the slot antenna (62; 62') and at least part of the substrate is sandwiched between layers of the multilayer package.

22. The multilayer package (17) of any one of claims 20 or 21, wherein the opening is formed within a closing area (180) of the multilayer package (17).

23. The multilayer package (17) of claim 22, wherein the prefabricated radiofrequency tag is fixed in the closing area (180) by hot-melt gluing.

24. The multilayer package (17) of any one of claims 22 to 23, wherein the opening is centred between two lateral edges (182-1, 182-2) of the closing area (180).

25. The multilayer package (17) of any one of claims 20 to 24, wherein the opening has a shape that is open towards the outside of the multilayer package (17).

26. A method for making a multilayer package comprising a prefabricated radiofrequency tag, said method comprising the following steps:
obtaining (70) a multilayer package having at least one conductive layer,
making (72) an opening in the at least one conductive layer of the multilayer package, said opening being adapted to receive a prefabricated radiofrequency tag (60) comprising a conductive substrate (64) on which a radiofrequency identification circuit (66) and a slot antenna (62 ; 62') are provided, the radiofrequency identification circuit (66) being linked to the slot antenna (62 ; 62') of the prefabricated radiofrequency tag (60); and
installing (74) the prefabricated radiofrequency tag in the multilayer package for linking it to the at least one conductive layer (192 ; 195) of the multilayer package (17) thereby increasing the radiation exposure of the prefabricated tag.

27. The method of claim 26, wherein the opening is surrounding the slot antenna (62; 62'), and at least part of the substrate is sandwiched between layers of the multilayer package.

28. The method of any one of claims 26 or 27, further comprising a step of fixing the prefabricated tag in the multilayer package by hot-melt gluing.
